(19) **Europäisches Patentamt / European Patent Office / Office européen des brevets**

(11) **EP 1 728 337 B1**

(12) # EUROPEAN PATENT SPECIFICATION

(45) Date of publication and mention of the grant of the patent:
**05.04.2017 Bulletin 2017/14**

(21) Application number: **05740032.7**

(22) Date of filing: **02.05.2005**

(51) Int Cl.:
*H04W 48/20* (2009.01)   *H04W 4/06* (2009.01)
*H04W 4/12* (2009.01)

(86) International application number:
**PCT/KR2005/001264**

(87) International publication number:
**WO 2005/109687 (17.11.2005 Gazette 2005/46)**

(54) **MEASUREMENT AND RECEPTION OF PREFERRED LAYER FOR MBMS IN MOBILE COMMUNICATION SYSTEM**

MESSUNG UND EMPFANG DER BEVORZUGTEN SCHICHT FÜR MBMS IN EINEM MOBILEN KOMMUNIKATIONSSYSTEM

MESURE ET RECEPTION D'UNE COUCHE PREFEREE DESTINEE A LA FOURNITURE DE MBMS DANS UN SYSTEME DE COMMUNICATION MOBILE

(84) Designated Contracting States:
**DE FI FR GB SE**

(30) Priority: **10.05.2004 KR 2004032850**

(43) Date of publication of application:
**06.12.2006 Bulletin 2006/49**

(73) Proprietor: **Samsung Electronics Co., Ltd.
Suwon-si, Gyeonggi-do, 443-742 (KR)**

(72) Inventors:
• **JEONG, Kyeong-In
Samsung El.Co.Ltd
Gyeonggi-do (KR)**
• **LEE, Kook-Heui
Samsung Electric Co. Ltd
Gyeonggi-do (KR)**

(74) Representative: **Grünecker Patent- und
Rechtsanwälte
PartG mbB
Leopoldstraße 4
80802 München (DE)**

(56) References cited:
**EP-A1- 1 353 521    EP-A2- 1 509 056
WO-A1-01/15481    WO-A2-2005/101886
US-A- 5 787 349    US-A1- 2002 105 926**

• **SAMSUNG: "Issues on Frequency Layer Convergence", 3GPP DRAFT; R2-040538, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Malaga, Spain; 20040212, 12 February 2004 (2004-02-12), XP050125510, [retrieved on 2004-02-12]**
• **SAMSUNG: "A Method to Move UEs to MBMS Enabled Cell", 3GPP DRAFT; R2-040076, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 20040119, 19 January 2004 (2004-01-19), XP050125088, [retrieved on 2004-01-19]**
• **QUALCOMM EUROPE: "Frequency Layer Convergence", 3GPP DRAFT; R2-040784, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Budapest, Hungary; 20040416, 16 April 2004 (2004-04-16), XP050141623, [retrieved on 2004-04-16]**

- **SAMSUNG: "Issues on Frequency Layer Convergence", 3GPP DRAFT; R2-040928 ISSUES ON FLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20040517, 17 May 2004 (2004-05-17), XP050125804, [retrieved on 2004-05-17]**

- **QUALCOMM EUROPE: "Frequency Layer Convergence scenarios", 3GPP DRAFT; R2-041310, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20040616, 16 June 2004 (2004-06-16), XP050141697, [retrieved on 2004-06-16]**

**Description**

**BACKGROUND OF THE INVENTION**

1. Field of the Invention

The present invention relates to a multimedia broadcast/multicast service (MBMS) mobile communication system, and more particularly to a method and an apparatus for enabling a user equipment (UE) to reselect a preferred layer for an MBMS in an MBMS mobile communication system.

2. Description of the Related Art

Recently, as communication technologies have been developed, mobile communication systems provide not only basic voice services, but also packet services by transmitting mass storage data, such as packet data or circuit data. In addition, the mobile communication systems have been developed into multimedia broadcast/communication systems capable of providing multimedia services. In order to support the multimedia broadcast/communication system, there has been suggested a multimedia broadcast/multicast service (MBMS) for providing data from one or plural multimedia data sources to user equipments (UEs).

The MBMS signifies a service for providing the same multimedia data to a plurality of UEs through a radio network. The UEs may share the common radio channel in order to save radio transmission resources. It should be noted that although the present invention will be described in relation to a 3rd generation projection partnership (3GPP) communication network, which stands for 3rd generation asynchronous mobile communication network, the present invention is also applicable for other mobile communication networks employing the MBMS.

In the mobile communication network providing the MBMS, the UE signifies a terminal or a subscriber capable of receiving the MBMS, and one cell may include a plurality of UEs. The cell is controlled by a node B, which is a base station for transmitting MBMS data to the UEs, and a radio network controller (RNC) is provided to control a plurality of cells. That is, the RNC selectively transmit MBMS data to predetermined cells while controlling radio channels established for providing the MBMS.

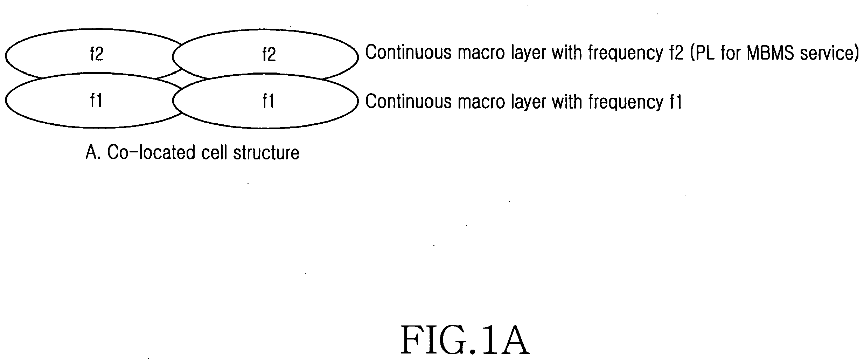

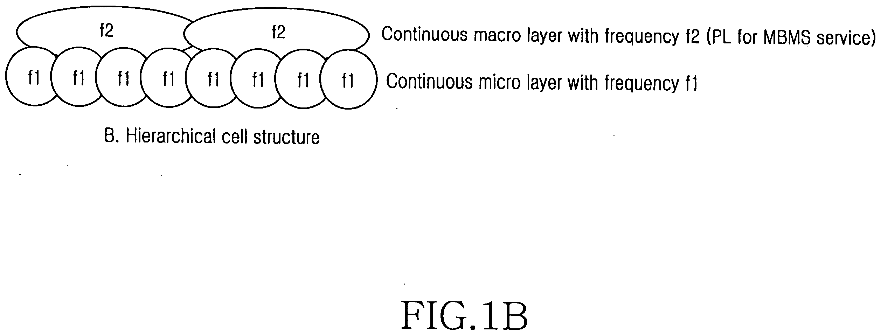

FIGS. 1A and 1B illustrate cell layer structures located in a service area.
FIG. 1A illustrates a co-located cell structure in which cells having the same size with different frequencies are overlapped in the service area, and FIG. 1B illustrates a hierarchical cell structure (HCS) in which cell having different sizes with different frequencies are overlapped in the service area.

Referring to FIG. 1A, the cells having the same size are overlapped in the service area with different frequencies, that is, a first frequency f1 and a second frequency f2. In this case, each cell is referred to as a "macro cell" and continuous macro cells define a "layer". That is, a first layer including continuous macro cells with the frequency f1 is overlapped with a second layer including continuous macro cells with the frequency f2 in the service area.

In the above cell structure shown in FIG. 1A, if a layer used for the MBMS is the second layer, UEs located in the first layer must reselect the second layer when the MBMS session starts or while the MBMS is being provided.

Such a layer reselection scheme of the UE for the MBMS is called "frequency layer convergence (FLC)". According to the FLC, a UTRAN sends signals to the UEs requesting the MBMS in order to allow the UEs to reselect the layer. That is, the UTRAN orders the UEs located in the first layer to reselect the second layer.

Although the above description has been made on the assumption that a preferred layer (PL) is the second layer, the PL may vary depending on locations. For instance, in FIG. 1A, the second layer may become the PL in a part of the service area and the first layer may become the PL in other parts of the service area. This is because the PL of the MBMS is determined according to the policy of an administrator for the cell structure and available radio resources of the cell.

The FLC is also applicable for the HCS in which the cells having the different sizes are located in the same service area with different frequencies (frequency 1 and frequency 2). The HCS can be formed in various patterns. Referring to FIG. 1B, the HCS includes continuous macro cells with the second frequency f2 and continuous micro cells with the first frequency f1. In the above HCS, if a layer used for the MBMS is the macro layer with the second frequency f2, UEs located in the micro layer must reselect the macro layer through the FLC.

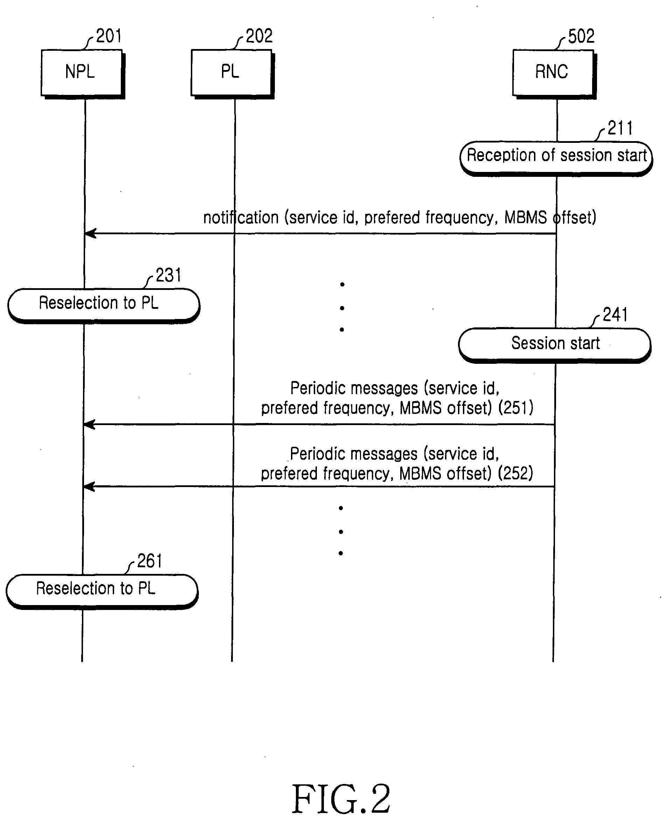

FIG. 2 is a signal flowchart for the FLC described with reference to FIG. 1.

A predetermined MBMS is illustrated in FIG. 2 as an example. The PL for the MBMS can be defined for overall MBMS or individual MBMS, which is still under discussion in the 3GPP. Such a definition for the PL does not exert an influence on the measurement of the UEs receiving the MBMS.

Referring to FIG. 2, reference numerals 201 to 203 represent a non-preferred layer (NPL), a preferred layer (PL) and an RNC for the MBMS, respectively. Reference numeral 211 presents that the RNC 203 receives a session start message for the MBMS through a core network. The session start message indicates that MBMS data will be transmitted to the UEs and network nodes, so that the UEs and network nodes may perform radio bearer establishment for the MBMS. The session start message includes information related to quality of service (QoS) of the MBMS data and an MBMS service area.

The RNC 203 sends a notification message 221 to the NPL 201 for the FLC. The notification message 221 includes information about the PL including a service ID, a preferred frequency, and an MBMS offset. Upon receiving the notification message 221, the UEs located in the NPL 201 reselects the PL 202 based on the information of the PL 202 included in the notification message 221. When the MBMS secession starts, the RNC 203 counts the number of UEs for the MBMS and determines the channel type and the radio bearer.

Then, the RNC 203 periodically transmits the PL information to the NPL 201 by using periodic messages 251 and 252. The periodic messages 251 and 252 include information identical to that of the notification message 221 in order to support mobility for the UEs.

For instance, a predetermined UE, which has been moved into the NPL 201 from a predetermined cell, receives the periodic messages 251 and 252 and reselects the PL 202 based on the service ID and the PL information so that the predetermined UE can continuously receive the MBMS.

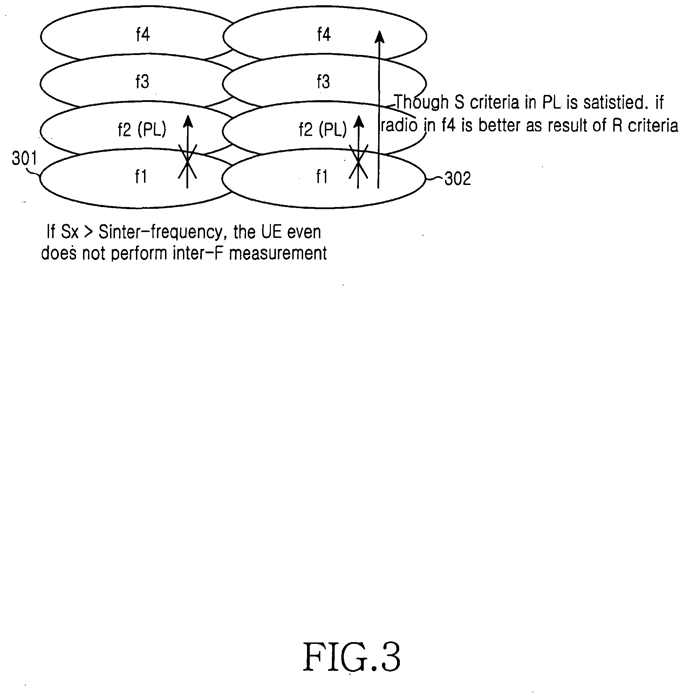

FIG. 3 illustrates problems occurring when the UE receives the MBMS according to a measurement scheme defined in the 3GPP R99 standard.

Referring to FIG. 3, a cell structure includes cells covering two service areas with four frequency bands while being overlapped with each other. If a layer with a second frequency f2 is selected as a PL in the two service areas, UEs located in layers with first, third and fourth frequencies f1, f3 and f4 must reselect the layer with the second frequency f2 when receiving the FLC signal prior to the MBMS session or when receiving the FLC signal while the MBMS session is being performed.

At this time, the cell reselection scheme defined in the 3GPP R99 standard presents following problems.

First, UEs under an idle mode or the CELL_FACH, CELL_PCH or URA_PCH state may perform measurement for the PL prior to the cell reselection in order to reselect a cell having superior frequency level. However, the UEs do not always perform the above measurement. That is, the UEs perform the above measurement according to a predetermined measurement scheme, wherein the measurement is performed only when the frequency level of a present cell drops below a predetermined threshold value.

For instance, an intra-frequency measurement is carried out by means of the UEs when a radio measurement value (Sx) of the present cell is lower than a sintrasearch value of the intra-frequency measurement. In addition, the UEs perform the inter-frequency measurement when the radio measurement value (Sx) of the present cell is lower than a sintersearch value of the inter-frequency measurement.

According to the above measurement scheme defined in the 3GPP R99 standard, as indicated by reference numeral 301 in FIG. 3, the UE located in the layer with the first frequency f1 may not reselect the PL with the second frequency f2. That is, even if radio level of the PL with the second frequency f2 is sufficient for the cell reselection, the UE does not perform the inter-frequency measurement or intra-frequency measurement for the cell reselection if the radio measurement value (Sx) of the present cell is higher than the inter-frequency sintersearch value.

Accordingly, the UE located in the layer with first frequency f1 does not perform the inter-frequency measurement, that is, the UE does not reselect the layer with the second frequency f2 even if it receives the signaling for the FLC, since the frequency level of the present cell (that is, the layer with the first frequency fl) is sufficiently high. Thus, the UE located in the layer with the first frequency f1 does not receive the MBMS provided from the PL.

Second, as indicated by reference numeral 302 in FIG. 3, even if the UE located in the layer with the first frequency f1 performs the inter-frequency measurement and the layer with the second frequency f2 has a radio value higher than a minimum value for the cell reselection, the UE may reselect the cell with the fourth frequency f4 instead of the cell (PL) with the second frequency f2 if the radio state of the cell with the fourth frequency f4 is superior to that of the cell (PL) with the second frequency f2. That is, even if the cell of the PL is under the condition sufficient for the cell reselection, the UE may reselect the cell of the NPL if the cell of the NPL has a radio state superior to that of the cell of the PL, so that the UE does not receive the MBMS provided from the PL.

Document "Issues on Frequency Layer Convergence" (Samsung, 3GPP TSG RAN WG2 draft, R2-040538, February 2004) it is dealt with the question when and how to apply a MBMS offset. The MBMS offset should be applied for cell reselection during a session to increase the probability that cells from the preferred frequency are reselected. There are two criteria in the cell reselection without HCS, namely cell selection criteria S and cell ranking criteria R. The MBMS offset shall be applied only to R criteria. If the cell with another frequency is in the highest rank, the UE shall not reselect this cell. The UE shall stay in the current cell instead of cell reselection to another frequency when the cell on preferred frequency is not to be reselected. Information such as service ids, preferred frequencies and the MBMS offsets, needs to be provided to the UE.

## SUMMARY OF THE INVENTION

The invention provides a method according to claim 1 and an apparatus according to claim 8.

Accordingly, the present invention has been made to solve the above-mentioned problems occurring in the prior art, and an object of the present invention is to provide a method of enabling a user equipment (UE) to reselect a preferred layer (PL) for a multimedia broadcast/multicast service (MBMS) in an MBMS mobile communication system.

Another object of the present invention is to provide a measurement method for a cell reselection enabling a UE to effectively reselect a PL in an MBMS mobile communication system.

Still another object of the present invention is to provide a method of applying an MBMS offset to a cell measurement scheme in an MBMS mobile communication system.

Still yet another object of the present invention is to provide a method of applying an MBMS offset based on a layered structure and a non-layered structure in an MBMS mobile communication system.

In order to accomplish these objects, according to one aspect of the present invention, there is provided a method as set forth in claim 1.

According to another aspect of the present invention, there is provided an apparatus as set forth in claim 8.

## BRIEF DESCRIPTION OF THE DRAWINGS

The above and other objects, features and advantages of the present invention will be more apparent from the following detailed description taken in conjunction with the accompanying drawings, in which:

FIG. 1 is a view illustrating a cell layer structure including layers overlapped with each other in the same service region;
FIG. 2 is a signal flowchart illustrating a procedure of enabling a user equipment (UE) to reselect a preferred layer;
FIG. 3 is a view illustrating problems occurring when a UE receives a multimedia broadcast/multicast service (MBMS) according to a measurement scheme defined in the 3GPP R99 standard;
FIG. 4 is a flowchart illustrating an operation of a UE for an MBMS according to an embodiment of the present invention; and
FIG. 5 is a block view illustrating a structure of a UE according to an embodiment of the present invention.

## DETAILED DESCRIPTION OF THE PREFERRED EMBODIMENT

Hereinafter, embodiments of the present invention will be described with reference to the accompanying drawings. In the following description of the present invention, a detailed description of known functions and configurations incorporated herein will be omitted when it may make the subject matter of the present invention rather unclear.

The present invention provides a measurement method of enabling a user equipment (UE) to reselect a preferred layer (PL) for a multimedia broadcast/multicast service (MBMS) in an MBMS mobile communication system. The UE joining in a predetermined MBMS for receiving the MBMS moves into the PL by receiving a signal from a UTRAN. According to the measurement scheme defined in the 3GPP R99 standard, the UE does not perform the cell reselection to the PL if radio level of a present cell is sufficient. In addition, even when the UE tries to reselect the PL due to low radio level of the present cell, the UE may not reselect the PL indicated by the UTRAN. This is because the measurement scheme of the 3GPP R99 standard has been defined regardless of the MBMS. Even if the measurement result is sufficient for cell reselection to the PL, the UE may reselect a cell located in a non-preferred layer (NPL) if the cell of the NPL has a radio state superior to that that of a cell of the PL.

Therefore, according to the present invention, the measurement scheme of the UE joining in the MBMS is discretely defined in order to enable the UE to reselect the PL for receiving the MBMS. In addition, the present invention provides a method of enabling the UE to receive the MBMS by taking backward compatibility with regard to the 3GPP R99 standard into consideration.

The 3GPP R99 standard defines S-criteria as a parameter for cell reselection and R-criteria for assigning a priority level of the cell reselection to cells satisfying the S-criteria. The cell satisfying the S-criteria qualifies for cell reselection. If a plurality of cells satisfy the S-criteria, the priority level for the cell reselection is assigned to the cells based on the R-criteria thereof. Such a cell reselection scheme used in the 3GPP R99 standard is also applicable for the present invention.

In order to solve the problems described with reference to FIG. 3, according to the present invention, the UE located in the NPL performs inter-cell measurement if the UE receives a signal for frequency layer convergence (FLC) prior to an MBMS session or periodic signals during the MBMS session.

That is, as the UE joining in the MBMS receives the FLC signal, the UE performs the inter-cell measurement regardless of the radio state of the present cell. In other words, the UE performs the inter-cell measurement even if the radio measurement value (Sx) of the present cell is higher than the inter-frequency sintersearch value/intra-frequency sintrasearch value, thereby solving the problem occurring in the prior art.

In addition, according to the present invention, an MBMS offset value transmitted from the UTRAN is applied when calculating the S-criteria representing a minimum value for the cell reselection. That is, when the UE tries to reselect the PL for the MBMS, the PL may have a priority level higher than that of the NPL due to the MBMS offset value.

In general, the S-criteria are represented as S-qual and S_rxlev as expressed in Equations 1 and 2.
Frequency Division Duplex (FDD) cell: Srxlev > 0 and Squal > 0
Time Division Duplex (TDD) cell: Srxlev > 0

### Equation 1
$$S\_qual = Q\_qualmeas - Q\_qual\min$$

### Equation 2
$$S\_rxlev = Qrxlevmeas - Qrxlev\min - Pcompensation$$

In Equations 1 and 2, Srxlev is a cell selection RX level value (dB) and Squal is a cell selection quality value (dB), which is applied only to the FDD cell. That is, the FDD cell qualifies for cell reselection if the cell selection RX level value and the cell selection quality value thereof are larger than "0". In addition, Qqualmeas is a measured cell quality value (dB) corresponding to Ec/No of CHPCH and Qqualmin is a minimum required quality level in the cell (dB). That is, in order to set the value of the Squal larger than "0", the value of Ec/No of CHICH measured in the measurement cell must be larger than a minimum required value in the cell. Qrxlevmeas is a measured cell RX level value, which is represented as received signal code power (RSCP) (dBm) of CHICH in the FDD cell and RSCP of P-CCPCH in the TDD cell. Qrxlevmin is a minimum required RX level in the cell (dBm). P_compensation is represented as max (UE_TXPWR_MAX_RACH-P_MAX, 0) (dB). That is, in order to set the value of the Srxlev larger than "0", the RSCP value of the CHICH (FDD cell) and the P-CCPCH (TDD cell) measured in the measurement cell must be larger than a sum of a predetermined minimum required value and a compensation value.

That is, if the Squal value and the Srxlev value are larger than "0", it means that the FDD cell satisfies the S-criteria representing a minimum value for the cell reselection, so the FDD cell qualifies for cell reselection. However, since the S-criteria are the minimum value for the cell reselection, if the cell reselection is exclusively carried out based on the S-criteria, the reselected cell may not satisfy the S-criteria, causing a ping-pong effect when continuously performing the cell reselection procedure. In order to solve the above problem, an MBMS_offset value is applied when calculating the S-criteria as expressed in Equations 3 and 4.

### Equation 3
$$Squal = Qqualmeas - Qqual\min(-MBMS_{offset})$$

### Equation 4
$$Srxlev = Qrxlevmeas - Qrxlev\min - Pcompensation(-MBMS_{offset})$$

The UE located in the NPL performs the inter-cell measurement by using PL information (information related to frequency or predetermined cells) and MBMS offset information included in signaling information indicating the FLC based on Equations 3 and 4.

According to the measurement scheme defined in the 3GPP R99 standard, all frequencies are measured when performing the inter-frequency measurement. For instance, if Sx < Sintersearch is satisfied, the inter-frequency measurement is performed with regard to all frequencies, thereby calculating S-qual and S_rxlev as shown in Equations 1 and 2. However, according to the present invention, the measurement is performed with respect to frequencies (or predetermined cells) included in the PL information. That is, the MBMS offset value is applied when calculating the S-criteria as shown in Equations 3 and 4, so that the S-criteria do not represent the minimum value for the cell reselection defined in the 3GPP R99 standard, but represent a value reflecting radio level for the cell reselection based on the MBMS offset. In addition, since the measurement is performed with respect to the selected frequencies or predetermined cells, instead of all frequencies, load and power consumption of the UE can be reduced while shortening time delay when performing the measurement.

In short, Equations 3 and 4 are applied to the UEs located in the NPL when the UEs receive the signal indicating the FLC. That is, upon receiving the signal indicating the FLC, the UE measures the selected frequencies or predetermined cells included in the signal without performing the inter-frequency measurement with respect to all frequencies and calculates the S-criteria for the cells with the selected frequencies or the predetermined cells based on Equations 3 and 4. In addition, if the calculated S-criteria satisfy the predetermined condition for the cell reselection, the cell reselection is performed. As mentioned above, the FDD cell qualifies for cell reselection if the Squal and Srxlev are larger than "0", and the TDD cell qualifies for cell reselection if the Srxlev is larger than "0"

If there are plural cells satisfying the S-criteria, the priority level for the cell reselection is assigned to the plural cells based on the S-criteria of the plural cells.

The above measurement scheme is applicable for the NHCS shown in FIG. 1A and the HCS shown in FIG. 1B. In a case of the HCS, if the UE receives the signal indicating the FLC, the UE measures the frequencies or predetermined cells included in the signal and calculate the S-criteria based on the Equations 3 and 4, thereby reselecting a cell having the highest priority from among cells satisfying "S > 0". However, if once the cell reselection to the PL is performed in the HCS though the above measurement scheme, the ping-pong effect may occur when continuously performing the cell reselection procedure through the HCS measurement scheme defined in the 3GPP R99 standard. For this reason, it is necessary to change the measurement scheme for the HCS. This is because the cell reselection scheme defined in the 3GPP R99 standard tends to primarily move the UEs, except for the UE having a fast speed, to the cell having the highest priority level. That is, when the UE located in the NPL tries to reselect the PL through the above measurement scheme of the present invention, if the new PL has the priority level lower than that of the NPL, the UE may remain in the NPL having the higher priority level due to the measurement scheme defined in the 3GPP R99 standard. Such a wrong cell reselection may repeat continuously.

In addition, although the PL may vary depending on service areas thereof, it is advantageous to form the same PL in the same service area in view of selective combining of the MBMS. Thus, if there are no special reasons, such as lack of radio resources, the same PL is located over the same service area. Therefore, if one layer is determined as a PL having a priority level lower than that of the NPL, the UE located in the PL may reselect the NPL through the cell reselection scheme defined in the 3GPP R99 standard, and then, reselect the PL through the cell reselection scheme according to the present invention because the NPL has the priority level higher than that of the PL. However, such a cell reselection scheme of the UE is not preferred in view of mobility of the UE. The movement of the UE in the course of PL=>NPL=> PL may degrade the QoS of the MBMS, so it is preferred to move the UE in the course of PL=> PL during the cell reselection.

Accordingly, the UE located in the PL for receiving the MBMS does not follow the HCS measurement scheme, which is defined in the 3GPP R99 standard by taking the priority levels of the cells in the HCS into consideration, but follow the NHCS measurement scheme of the 3GPP R99 standard. That is, under the condition of Sx (radio level of present cell) < intra-frequency sintrasearch, the UE performs the intra-frequency measurement for the present cell. In addition, under the condition of Sx < inter-frequency sintrasearch, the UE performs the inter-frequency measurement for all cells. At this time, the priority level for the layers of the HCS may not be used.

If the UE moves in the HCS at a high speed, the measurement scheme defined in the 3GPP R99 standard is applicable. This is because the UE moving at the high speed does not perform the measurement for the layer having a priority level higher than that of the present cell, but perform the measurement for the layer having a priority level lower than the present cell during the cell reselection.

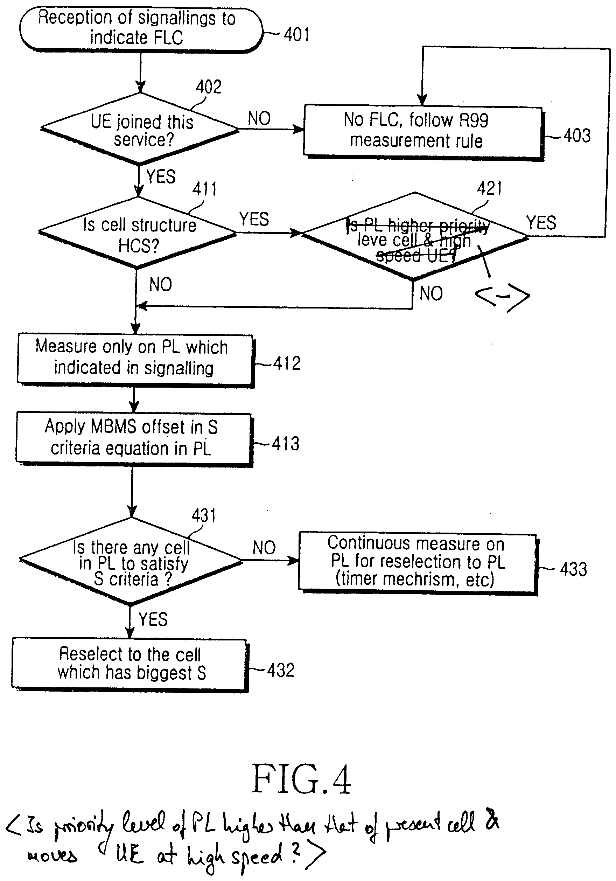

FIG. 4 is a flowchart illustrating an operation of the UE performing the measurement scheme for the MBMS according to an embodiment of the present invention. The UE is located in the NPL for the MBMS.

Referring to FIG. 4, the UE located in the NPL for the MBMS receives signals indicating the FLC (step 401). The signals may be transmitted to the UE prior to the MBMS session or during the MBMS session and include the MBMS ID, PL information and MBMS offset. Then, the UE determines if the UE joins in the MBMS based on the MBMS ID included in the signal (step 402). If it is determined in step 402 that the UE does not join in the MBMS, the UE performs the measurement according to the measurement scheme defined in the 3GPP R99 standard without performing the FLC (step 403).

In contrast, if it is determined in step 402 that the UE joins in the MBMS, the UE determines whether the present cell structure is the HCS (step 411). If it is determined in step 411 that the present cell structure is the HCS, the UE checks whether the PL included in the FLC signal has a priority level higher than that of the present cell and whether the UE moves at the high speed (step 421). If the PL included in the FLC signal has the priority level higher than that of the present cell and the UE moves at the high speed, the UE performs the measurement according to the measurement scheme defined in the 3GPP R99 standard without performing the FLC in step 403.

If it is determined in step 411 that the present cell structure is not the HCS, the UE performs the measurement by using the PL only according to the PL information included in the FLC signal. At this time, the UE measures the frequency level of the layers or cells included in the PL information without taking the inter-frequency measurement and the intra-frequency measurement into consideration. The PL information may selectively include the predetermined frequencies or predetermined cells.

Then, S-criteria for the measured PL are calculated based on Equations 3 and 4 by applying the MBMS offset to the S-criteria (step 413).

The MBMS offset is transmitted to the UE through the FLC signal. Then, the UE determines if there is at least one cell satisfying a predetermined condition of the S-criteria including the MBMS offset value (step 431). The predetermined condition is "Squal and Srxlev > 0" in the case of the FDD cell, or "Srxlev > 0" in the case of the TDD cell. If there is at least one cell satisfying the predetermined condition of the S-criteria, the UE reselects the cell having the highest S-criteria.

However, if there is no cell satisfying the predetermined condition of the S-criteria, the UE performs the measurement with respect to the PL for the FLC in the present PLC (step 433). Since the continuous measurement may cause power consumption of the UE, the measurement for the PL must be carried out within a predetermined period of time by using a timer mechanism.

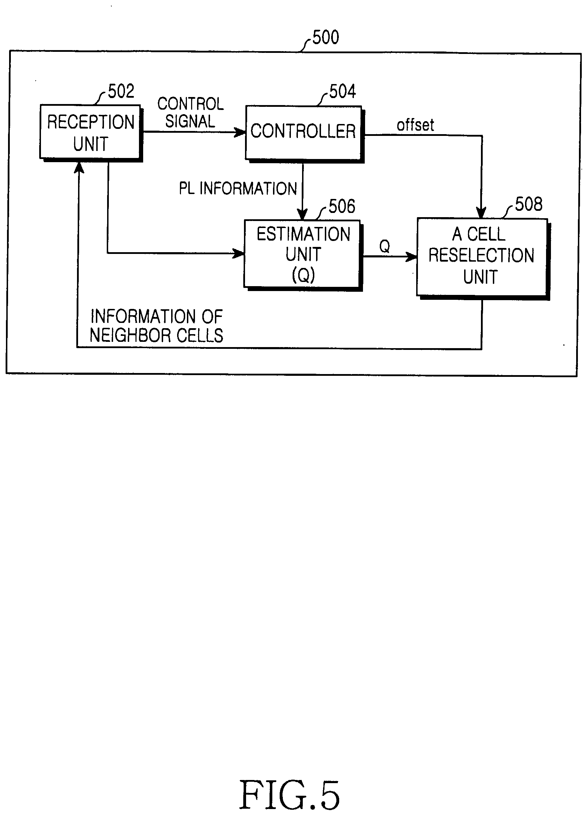

FIG. 5 is a block view illustrating the structure of the UE for the MBMS according to an embodiment of the present invention.

Referring to FIG. 5, the UE 500 includes a reception unit 502, an estimation unit 506, a cell reselection unit 508, and a controller 504. The UE 500 is located in the NPL in order to receive the MBMS.

The reception unit 502 receives the signals notifying the FLC and including the MBMS ID, cell IDs included in the PL and MBMS offsets from the RNC prior to the MBMS session or during the MBMS session. In addition, the reception unit 502 also receives frequency level of neighbor cells. At this time, the reception unit 502 receives the frequency level of the neighbor cells under the control of the controller 504 based on information of the neighbor cells transmitted thereto from the cell reselection unit 508.

The controller 504 determines if the UE joins in the MBMS based on the MBMS ID received in the reception unit 502. If it is determined that the UE joins in the MBMS, the controller 504 controls the estimation unit 506 in such a manner that the measurement can be performed with regard to cells included in the PL information obtained through the FLC SIGNAL.

Thus, the estimation unit 506 measures Q_qualmeas and Q_rxlevmeas of the layers or cells included in the PL information under the control of the controller 504 without taking the inter-frequency measurement and the intra-frequency measurement into consideration. In addition, the estimation unit 506 sends Q_qualmeas and Q_rxlevmeas of the layers or cells to the cell reselection unit 508.

Upon receiving the Q_qualmeas and Q_rxlevmeas from the estimation unit 506, the cell reselection unit 508 calculates the S-criteria for the cells included in the PL. The S-criteria are represented as Squal and Srxlev as shown in Equations 3 and 4 by applying the MBMS offset to the S-criteria. Then, the cell reselection unit 508 determines if there is at least one cell satisfying the predetermined condition of the S-criteria including the MBMS offset value. As mentioned above, the predetermined condition is "Squal and Srxlev > 0" in the case of the FDD cell, or "Srxlev > 0" in the case of the TDD cell.

If there is at least one cell satisfying the predetermined condition of the S-criteria, the controller 504 controls the estimation unit 506 in such a manner that the cell having the highest S-criteria is reselected from among cells satisfying the predetermined condition of the S-criteria and controls the reception unit 502 to receive the frequency level of the reselected cells.

Thus, the estimation unit 506 reselects the cell having the highest S-criteria from among cells satisfying the predetermined condition of the S-criteria and transmits the information of the reselected cell into the reception unit 502 under the control of the controller 504.

As described above, according to the present invention, the UE may receive the MBMS based on the layer structure of the present cell after receiving the FLC signals. In addition, the MBMS offset included in the FLC signal is used for calculating the S-criteria, so that the ping-pong effect, which may occur when the cell reselection is continuously performed, can be prevented.

While the invention has been shown and described with reference to certain preferred embodiments thereof, it will be understood by those skilled in the art that various changes in form and details may be made therein without departing from the scope of the invention as defined by the appended claims.

## Claims

1. A method of enabling a user equipment, UE, (500) located in a non-preferred cell to reselect a preferred cell configured for providing a desired broadcast service in a mobile communication system including at least one UE and a radio network controller, RNC, for controlling a plurality of

   cells aligned in the same area with different frequencies, the method comprising the steps of:

   (a) receiving (401) a signal including information related to a preferred frequency of the broadcast service from the RNC;

(b) determining (402) if the UE joins in broadcast service ;

**characterized in that**
the information related to the preferred frequency includes a service ID for the broadcast service, IDs of the cells providing the preferred frequency, and an offset value of the broadcast service, and
the method further comprises the steps of:

(c) if the UE joins in the broadcast service, determining (411) if a cell structure of the non-preferred cell is a hierarchical cell structure, HCS;

(d) if the cell structure of the non-preferred cell is HCS, checking (421) if the cells providing the preferred frequency have a priority level higher than that of the non-preferred cell and if the UE moves at high speed;

(e) if the cells providing the preferred frequency have the priority level higher than that of the non-preferred cell and the UE moves at the high speed, selecting (403) one from cells having a highest priority level;

(f) if the UE joins in the broadcast service, and if the cell structure of the non-preferred cell is not HCS or the cells providing the preferred frequency have not the priority level higher than that of the non-preferred cell or the UE does not move at the high speed, measuring parameter values for cell reselection with respect to cells providing the broadcast service and selecting (412, 413, 431, 432, 433) one from said cells providing the preferred frequency, and receiving the broadcast service from the selected cell.

2. The method as claimed in claim 1, wherein the step of selecting one from cells in step (f) includes the substeps of calculating a reselection value of the cells providing the preferred frequency by using the broadcast offset value, determining if the calculated reselection value satisfies a predetermined condition, and reselecting a cell having a highest reselection value from among the cells satisfying the predetermined condition.

3. The method as claimed in claim 2, wherein the reselection value includes a quality value, Squal, and a cell selection RX level value, Srxlev, of the cells.

4. The method as claimed in claim 3, wherein the Squal is calculated according to a following equation:

$Squal = Qqualmeas - Qqual$ min($-MBMS_{offset}$), wherein Qqualmeas is a measured cell quality value and Qqualmin is a minimum required quality level in the cell, and MBMS_offset is said offset value of the broadcast service, wherein the broadcast service is a multimedia broadcast/multicast service, MBMS.

5. The method as claimed in claim 3, wherein the Srxlev is calculated according to a following equation:

$Srxlev = Qrxlevmeas - Qrxlev$ min$- Pcompensation$($-MBMS_{offset}$), wherein Qrxlevmeas is a measured cell RX level value, Qrxlevmin is a minimum required RX level in the cell, P_compensation is a large one between transmission power of the UE and 0, MBMS_offset is said offset value of the broadcast service, wherein the broadcast service is a multimedia broadcast/multicast service, MBMS.

6. The method as claimed in claim 3, wherein the predetermined condition is "Squal and Srxlev > 0" in a case of a frequency division duplex, FDD, cell, or "Srxlev > 0" in a case of a time division duplex, TDD, cell.

7. The method as claimed in claim 1, wherein the UE receives a notification message including information of the cells providing the broadcast service through the signal of the RNC prior to receiving a session start message notifying a start of the broadcast service.

8. An apparatus for enabling a user equipment, UE, (500) located in a non-preferred cell to reselect a preferred cell configured for providing a desired broadcast service in a mobile communication system including at least one UE and a radio network controller, RNC, for controlling a plurality of cells aligned in the same area with different frequencies, the apparatus comprising:

an estimation unit (506) for determining if the UE joins in the broadcast service and measuring parameter values for cell reselection with respect to cells providing the broadcast service if the UE joins in broadcast service;
the apparatus being configured for performing the method according to one of claims 1 - 7, and the apparatus further comprising:

a reception section (502) for receiving said signal including information related to a preferred frequency of the broadcast service from the RNC, wherein the information related to the preferred frequency includes a service ID for the broadcast service, IDs of the cells providing the preferred frequency, and an offset value of the broadcast service;

a controller (504) for obtaining the information related to the preferred frequency from the reception unit and ordering cell reselection according to a predetermined condition for the cell reselection; and

a cell reselection unit (508) for calculating a reselection value of the cells providing the preferred frequency by using a measured quality value and the information related to the preferred frequency transmitted thereto from the controller, determining if the calculated reselection value satisfies the predetermined condition, and reselecting a cell having a highest reselection value from among the cells satisfying the predetermined condition under the control of the controller.

9. The apparatus as claimed in claim 8, wherein the cell reselection unit is configured to calculate the reselection value by using the offset value of the broadcast service.

10. The apparatus as claimed in claim 9, wherein the reselection value is configured to include a quality value, Squal, and a cell selection RX level value, Srxlev, of the cells.

11. The apparatus as claimed in claim 10, wherein the apparatus is configured for calculating the Squal according to a following equation:

$Squal = Qqualmeas - Qqualmm(-MBMS_{offset})$, wherein Qqualmeas is a measured cell quality value and Qqualmin is a minimum required quality level in the cell, and MBMS_offset is said offset value of the broadcast service, wherein the broadcast service is a multimedia broadcast/multicast service, MBMS.

12. The apparatus as claimed in claim 10, wherein the apparatus is configured for calculating the Srxlev according to a following equation:

$Srxlev = Qrxlevmeas - Qrxlev$ min- $Pcompensation(-MBMS_{offset})$, wherein Qrxlevmeas is a measured cell RX level value, Qrxlevmin is a minimum required RX level in the cell, P_compensation is a large one between transmission power of the UE and 0, MBMS_offset is said offset value of the broadcast service, wherein the broadcast service is a multimedia broadcast/multicast service, MBMS.

13. The apparatus as claimed in claim 10, wherein the controller is configured to determine if the calculated parameter values satisfy the predetermined condition and to control the cell reselection unit in such a manner that the cell reselection unit reselects a cell having a highest reselection value if the parameter values satisfy the predetermined condition.

14. The apparatus as claimed in claim 13, wherein the predetermined condition is "Squal and Srxlev > 0" in a case of a frequency division duplex, FDD, cell, or "Srxlev > 0" in a case of a time division duplex, TDD, cell.

15. The apparatus as claimed in claim 8, wherein the UE is configured to receive a notification message including information of the cells providing the broadcast service through the signal of the RNC prior to receiving a session start message notifying a start of the broadcast service.

**Patentansprüche**

1. Verfahren zur Aktivierung einer Anwendereinrichtung, UE, (500), die in einer nicht bevorzugten Zelle liegt, um eine bevorzugte Zelle wieder auszuwählen, die für die Bereitstellung eines gewünschten Rundfunkdienstes in einem Mobiltelekommunikationssystem ausgebildet ist, das mindestens eine UE und eine Funknetzwerksteuerung, RNC, zur Steuerung mehrerer Zellen aufweist, die in dem gleichen Bereich mit unterschiedlichen Frequenzen ausgerichtet sind, wobei das Verfahren die Schritte umfasst:

(a) Empfangen (401) eines Signals aus der RNC, das Information enthält, die eine bevorzugte Frequenz des Rundfunkdienstes betrifft;
(b) Ermitteln (402), ob die UE an dem Rundfunkdienst teilnimmt;

**dadurch gekennzeichnet, dass**

die die bevorzugte Frequenz betreffende Information eine Dienst-Kennung für den Rund-funkdienst, Kennungen der Zellen, die die bevorzugte Frequenz bereitstellen, und einen Offset-Wert des Rundfunkdienstes enthält, und wobei das Verfahren ferner die Schritte umfasst:

(c) wenn die UE an dem Rundfunkdienst teilnimmt, Ermitteln (411), ob eine Zellenstruktur der nicht bevorzugten Zelle eine hierarchische Zellenstruktur, HCS, ist;

(d) wenn die Zellenstruktur der nicht bevorzugten Zelle eine HCS ist, Prüfen (421), ob die Zellen, die die bevorzugte Frequenz bereitstellen, eine Prioritätsebene haben, die höher als diejenige der nicht bevorzugten Zelle ist, und ob sich die UE mit hoher Geschwindigkeit bewegt;

(e) wenn die Zellen, die die bevorzugte Frequenz bereitstellen, die Prioritätsebene haben, die höher ist als diejenige der nicht bevorzugten Zelle, und sich die UE mit der hohen Geschwindigkeit bewegt, Auswählen (403) einer Zelle aus Zellen, die eine höchste Prioritätsebene haben;

(f) wenn die UE an dem Rundfunkdienst teilnimmt und wenn die Zellenstruktur der nicht bevorzugten Zelle nicht eine HCS ist oder die Zellen, die die bevorzugte Frequenz bereitstellen, nicht die Prioritätsebene haben, die höher ist als diejenige der nicht bevorzugten Zelle oder die UE sich nicht mit der hohen Geschwindigkeit bewegt, Messen von Parameterwerten für eine Zellenwiederwahl in Bezug zu Zellen, die den Rundfunkdienst bereitstellen, und Auswählen (412, 413, 431, 432, 433) einer Zelle aus den Zellen, die die bevorzugte Frequenz bereitstellen, und Empfangen des Rundfunkdienstes aus der ausgewählten Zelle.

2. Verfahren nach Anspruch 1, wobei der Schritt des Auswählens einer der Zellen im Schritt (f) die Teilschritte umfasst: Berechnen eines Wiederauswahlwertes der Zellen, die die bevorzugte Frequenz bereitstellen, unter Anwendung des Rundruf-Offset-Wertes, Ermitteln, ob der berechnete Wiederauswahlwert einer vorbestimmten Bedingung genügt, und Wiederauswählen einer Zelle mit einem höchsten Wiederauswahlwert aus den Zellen, die der vorbestimmten Bedingung genügen.

3. Verfahren nach Anspruch 2, wobei der Wiederauswahlwert einen Qualitätswert, Squal, und einen Zellenauswahl-RX-Pegelwert, Srxlev, der Zellen enthält.

4. Verfahren nach Anspruch 3, wobei der Squal entsprechend einer folgenden Gleichung berechnet wird:

$Squal = Qqualmeas - Qqual\ min(-MBMS_{offset})$, wobei Qqualmeas ein gemessener Zellenqualitätswert und Qqualmin ein minimaler erforderlicher Qualitätspegel in der Zelle ist, und $MBMS_{offset}$ der Offset-Wert des Rundfunkdienstes ist, wobei der Rundfunkdienst ein Multime-diarundruf/Mehrfachruf-Dienst, MBMS, ist.

5. Verfahren nach Anspruch 3, wobei der Srexlev entsprechend einer folgenden Gleichung berechnet wird:

$Srxlev = Qrxlevmeas - Qrxlev\ min - Pcompensation(-MBMSoffset)$, wobei Qrxlevmeas ein gemessener Zellen-RX-Pegelwert ist, Qrxlevmin ein minimal erforderlicher RX-Pegel in der Zelle ist, Pcompensation groß ist zwischen Sendeleistung der UE und 0, und $MBMS_{offset}$ der Offset-Wert des Rundfunkdienstes ist, wobei der Rundfunkdienst ein Multimediarundruf/Mehrfachruf-Dienst, MBMS, ist.

6. Verfahren nach Anspruch 3, wobei die vorbestimmte Bedingung ist: "Squal und Srxlev > 0" im Falle einer Duplexzelle mit Frequenzaufteilung, FDD, oder "Srxlev > 0" im Falle einer Duplexzelle mit Zeitaufteilung, TDD.

7. Verfahren nach Anspruch 1, wobei die UE eine Benachrichtigungsnachricht mit Information der Zellen, die den Rundfunkdienst bereitstellen, durch das Signal der RNC vor dem Empfang einer Sitzungsbeginnnachricht empfängt, die einen Beginn des Rundfunkdienstes bekannt gibt.

8. Vorrichtung zur Aktivierung einer Anwendereinrichtung, UE, (500), die in einer nicht bevorzugten Zelle liegt, um eine bevorzugte Zelle wieder auszuwählen, die zur Bereitstellung eines gewünschten Rundfunkdienstes in einem Mobilkommunikationssystem ausgebildet ist, das mindestens eine UE und eine Funknetzwerksteuerung, RNC, zur Steuerung mehrerer Zellen aufweist, die in dem gleichen Bereich mit unterschiedlichen Frequenzen ausgerichtet sind, wobei die Vorrichtung umfasst:

eine Abschätzeinheit (506) zur Ermittlung, ob die UE an dem Rundfunkdienst teilnimmt, und zur Messung von Parameterwerten für eine Zellenwiederauswahl in Bezug auf Zellen, die den Rundfunkdienst bereitstellen, wenn die UE an dem Rundfunkdienst teilnimmt;

wobei die Vorrichtung ausgebildet ist, das Verfahren nach einem der Ansprüche 1-7 auszuführen, und wobei die Vorrichtung ferner umfasst:

einen Empfangsabschnitt (502) zum Empfangen des Signals, das Information in Bezug auf eine bevorzugte Frequenz des Rundfunkdienstes enthält, von der RNC, wobei die die bevorzugte Frequenz betreffende Information eine Dienst-Kennung für den Rundfunkdienst, Kennungen der Zellen, die die bevorzugte Frequenz bereitstellen, und einen Offset-Wert des Rundfunkdienstes enthält;

eine Steuerung (504) zum Erhalten der Information, die die bevorzugte Frequenz betrifft, aus der Empfangseinheit und zur Anforderung einer Zellenwiederauswahl entsprechend einer vorbestimmten Bedingung für die Zellenwiederauswahl; und

eine Zellenwiederauswahleinheit (508) zur Berechnung eines Wiederauswahlwertes der Zellen, die die bevorzugte Frequenz bereitstellen, unter Anwendung eines gemessenen Qualitätswertes und der Information, die die bevorzugte Frequenz betrifft, die ihr von der Steuerung gesendet wird, zur Ermittlung, ob der berechnete Wiederauswahlwert der vorbestimmten Bedingung genügt, und zur Wiederauswahl einer Zelle mit einem höchsten Wiederauswahlwert aus den Zellen, die der vorbestimmten Bedingung genügen, wobei dies durch die Steuerung gesteuert ist.

9. Vorrichtung nach Anspruch 8, wobei die Zellenwiederauswahleinheit ausgebildet ist, den Wiederauswahlwert unter Anwendung des Offset-Wertes des Rundfunkdienstes zu berechnen.

10. Vorrichtung nach Anspruch 9, wobei der Wiederauswahlwert ausgebildet ist, einen Qualitätswert, Squal, und einen Zellenauswahl-RX-Pegelwert, Srxlev, der Zellen zu enthalten.

11. Vorrichtung nach Anspruch 10, wobei die Vorrichtung ausgebildet ist, den Squal gemäß einer folgenden Formel zu berechnen:

$Squal = Qqualmeas - Qqual$ min$(-MBMS_{offset})$, wobei Qqualmeas ein gemessener Zellenqualitätswert und Qqualmin ein minimaler erforderlicher Qualitätspegel in der Zelle ist, und $MBMS_{offset}$ der Offset-Wert des Rundfunkdienstes ist, wobei der Rundfunkdienst ein Multimediarundruf/Mehrfachruf-Dienst, MBMS, ist.

12. Vorrichtung nach Anspruch 10, wobei die Vorrichtung ausgebildet ist, den Srxlev entsprechend einer folgenden Gleichung zu berechnen:

$Srxlev = Qrxlevmeas - Qrxlev$ min $- Pcompensation(-MBMS_{offset})$, wobei Qrxlevmeas ein gemessener Zellen-RX-Pegelwert ist, Qrxlevmin ein minimal erforderlicher RX-Pegel in der Zelle ist, Pcompensation groß ist zwischen Sendeleistung der UE und 0, und $MBMS_{offset}$ der Offset-Wert des Rundfunkdienstes ist, wobei der Rundfunkdienst ein Multimediarundruf/Mehrfachruf-Dienst, MBMS, ist.

13. Vorrichtung nach Anspruch 10, wobei die Steuerung ausgebildet ist zu ermitteln, ob die berechneten Parameterwerte der vorbestimmten Bedingung genügen, und die Zellenwiederauswahleinheit so zu steuern, dass die Zellenwiederauswahleinheit eine Zelle erneut auswählt, die einen höchsten Wiederauswahlwert hat, wenn die Parameterwerte der vorbestimmten Bedingung genügen.

14. Vorrichtung nach Anspruch 13, wobei die vorbestimmte Bedingung ist:

"Squal und Srxlev > 0" im Falle einer Duplexzelle mit Frequenzaufteilung, FDD, oder
"Srxlev > 0" im Falle einer Duplexzelle mit Zeitaufteilung, TDD.

15. Vorrichtung nach Anspruch 8, wobei die UE ausgebildet ist, eine Benachrichtigungsnachricht mit Information der Zellen, die den Rundfunkdienst bereitstellen, durch das Signal der RNC vor dem Empfang einer Sitzungsbeginnnachricht zu empfangen, die einen Beginn des Rundfunkdienstes bekannt gibt.

**Revendications**

1. Procédé d'habilitation d'un équipement d'utilisateur UE (500), soit User Equipment, situé dans une cellule non préférée pour resélectionner une cellule préférée configurée pour fournir un service de diffusion désiré dans un système de communication mobile incluant au moins un UE et un contrôleur de réseau radio RNC, soit Radio Network Controller, pour contrôler une pluralité de cellules alignées dans la même zone avec différentes fréquences, le procédé comprenant les étapes suivantes :

(a) réception (401) en provenance du RNC d'un signal incluant de l'information relative à une fréquence préférée du service de diffusion ;
(b) détermination (402) du fait que l'UE participe au service de diffusion ;

**caractérisé en ce que**
l'information relative à la fréquence préférée inclut un identifiant de service pour le service de diffusion, des identifiants des cellules fournissant la fréquence préférée, et une valeur de décalage du service de diffusion, et le procédé comprend en outre les étapes suivantes :

(c) si l'UE participe au service de diffusion, détermination (411) du fait qu'une structure de cellule de la cellule non préférée est une structure de cellule hiérarchique HCS, soit Hierarchical Cell Structure ;
(d) si la structure de cellule de la cellule non préférée est HCS, vérification (421) du fait que les cellules fournissant la fréquence préférée ont un niveau de priorité supérieur à celui de la cellule non préférée et du fait que l'UE se déplace à haute vitesse ;
(e) si les cellules fournissant la fréquence préférée ont un niveau de priorité supérieur à celui de la cellule non préférée et que l'UE se déplace à haute vitesse, sélection (403) parmi les cellules d'une cellule ayant le niveau de priorité le plus élevé ;
(f) si l'UE participe au service de diffusion, et si la structure de cellule de la cellule non préférée n'est pas HCS ou les cellules fournissant la fréquence préférée n'ont pas un niveau de priorité supérieur à celui de la cellule non préférée ou l'UE ne se déplace pas à haute vitesse, mesure de valeurs de paramètre pour une resélection de cellule par rapport à des cellules fournissant le service de diffusion et sélection (412, 413, 431, 432, 433) parmi lesdites cellules d'une cellule fournissant la fréquence préférée, et réception du service de diffusion en provenance de la cellule sélectionnée.

2. Procédé selon la revendication 1, dans lequel l'étape de sélection parmi les cellules d'une cellule à l'étape (f) inclut les sous-étape de calcul d'une valeur de resélection des cellules fournissant la fréquence préférée en utilisant la valeur de décalage diffusée, de détermination du fait que la valeur de resélection calculée répond à une condition prédéterminée, et de resélection d'une cellule ayant la valeur de resélection la plus élevée parmi les cellules répondant à la condition prédéterminée.

3. Procédé selon la revendication 2, dans lequel la valeur de resélection inclut une valeur de qualité, soit Squal, et une valeur de niveau RX de sélection de cellule, soit Srxlev, des cellules.

4. Procédé selon la revendication 3, dans lequel la valeur Squal est calculée conformément à l'équation suivants :

$$Squal = Qqualmeas - Qqualmin(-MBMS_{offset}),$$

dans laquelle Qqualmeas est une valeur de qualité de cellule mesurée et Qqualmin est un niveau de qualité requise minimal dans la cellule, et $MBMS_{offset}$ est ladite valeur de décalage du service de diffusion, dans lequel le service de diffusion est un service de diffusion/multidiffusion multimédia MBMS, soit Multimedia Broadcast/Multicast Service.

5. Procédé selon la revendication 3, dans lequel la valeur Srxlev est calculée conformément à l'équation suivants :

$$Srxlev = Qrxlevmeas - Qrxlevmin - Pcompensation(-MBMS_{offset}),$$

dans laquelle Qrxlevmeas est une valeur de niveau RX de cellule mesurée, Qrxlevmin est un niveau RX requis minimal dans la cellule, Pcompensation est une valeur élevée entre la puissance de transmission de l'UE et 0, $MBMS_{offset}$ est ladite valeur de décalage du service de diffusion, dans lequel le service de diffusion est un service de diffusion/multidiffusion multimédia MBMS.

**6.** Procédé selon la revendication 3, dans lequel la condition prédéterminée est "Squal et Srxlev > 0" dans le cas d'une cellule de duplexage fréquentiel FDD, soit Frequency Division Duplex, ou "Srxlev > 0" dans le cas d'une cellule de duplexage temporel TDD, soit Time Division Duplex.

**7.** Procédé selon la revendication 1, dans lequel l'UE reçoit un message de notification incluant de l'information sur les cellules fournissant le service de diffusion via le signal du contrôleur RNC avant la réception d'un message de démarrage de session notifiant un démarrage du service de diffusion.

**8.** Appareil d'habilitation d'un équipement d'utilisateur UE (500) situé dans une cellule non préférée pour resélectionner une cellule préférée configurée pour fournir un service de diffusion désiré dans un système de communication mobile incluant au moins un UE et un contrôleur de réseau radio RNC pour contrôler une pluralité de cellules alignées dans la même zone à différentes fréquences, l'appareil comprenant :

une unité d'estimation (506) pour déterminer si l'UE participe au service de diffusion et mesurer des valeurs de paramètre pour une resélection de cellule par rapport à des cellules fournissant le service de diffusion si l'UE participe au service de diffusion ;
l'appareil étant configuré pour mettre en oeuvre le procédé selon l'une des revendications 1 à 7, et l'appareil comprenant en outre :

une section de réception (502) pour recevoir du RNC ledit signal incluant de l'information relative à une fréquence préférée du service de diffusion, dans lequel l'information relative à la fréquence préférée inclut un identifiant de service pour le service de diffusion, des identifiants des cellules fournissant la fréquence préférée, et une valeur de décalage du service de diffusion ;
un contrôleur (504) pour obtenir l'information relative à la fréquence préférée de l'unité de réception et ordonnancer une resélection de cellule conformément à une condition prédéterminée pour la resélection de cellule ; et
une unité de resélection de cellule (508) pour calculer une valeur de resélection des cellules fournissant la fréquence préférée en utilisant une valeur de qualité mesurée et l'information relative à la fréquence préférée transmise depuis le contrôleur, pour déterminer si la valeur de resélection calculée répond à la condition prédéterminée, et resélectionner une cellule ayant la valeur de resélection la plus élevée parmi les cellules répondant à la condition prédéterminée sous contrôle du contrôleur.

**9.** Appareil selon la revendication 8 dans lequel l'unité de resélection de cellule est configurée pour calculer la valeur de resélection en utilisant la valeur de décalage du service de diffusion.

**10.** Appareil selon la revendication 9 dans lequel la valeur de resélection est configurée pour inclure une valeur de qualité Squal et une valeur de niveau RX de sélection de cellule Srxlev des cellules.

**11.** Appareil selon la revendication 10, dans lequel l'appareil est configuré pour calculer la valeur Squal conformément à l'équation suivants :

$$Squal = Qqualmeas - Qqualmin(-MBMS_{offset}),$$

dans laquelle Qqualmeas est une valeur de qualité de cellule mesurée et Qqualmin est un niveau de qualité requise minimal dans la cellule, et $MBMS_{offset}$ est ladite valeur de décalage du service de diffusion, dans lequel le service de diffusion est un service de diffusion/multidiffusion multimédia MBMS.

**12.** Appareil selon la revendication 10 dans lequel l'appareil est configuré pour calculer la valeur Srxlev conformément à l'équation suivants :

$$Srxlev = Qrxlevmeas - Qrxlevmin - Pcompensation(-MBMS_{offset}),$$

dans laquelle Qrxlevmeas est une valeur de niveau RX de cellule mesurée, Qrxlevmin est un niveau RX requis minimal dans la cellule, Pcompensation est une valeur élevée entre la puissance de transmission de l'UE et 0,

$MBMS_{offset}$ est ladite valeur de décalage du service de diffusion, dans lequel le service de diffusion est un service de diffusion/multidiffusion multimédia MBMS.

13. Appareil selon la revendication 10, dans lequel le contrôleur est configuré pour déterminer si les valeurs de paramètre calculées répondent à la condition prédéterminée et pour commander l'unité de resélection de cellule de telle sorte que l'unité de resélection de cellule resélectionne une cellule ayant la valeur de resélection la plus élevée si les valeurs de paramètre répondent à la condition prédéterminée.

14. Appareil selon la revendication 13, dans lequel la condition prédéterminée est "Squal et Srxlev > 0" dans le cas d'une cellule de duplexage fréquentiel FDD, ou "Srxlev > 0" dans le cas d'une cellule de duplexage temporel TDD.

15. Appareil selon la revendication 8, dans lequel l'UE est configuré pour recevoir un message de notification incluant de l'information sur les cellules fournissant le service de diffusion via le signal du contrôleur RNC avant la réception d'un message de démarrage de session notifiant un démarrage du service de diffusion.

| f2 | f2 | Continuous macro layer with frequency f2 (PL for MBMS service) |
|----|----|----|
| f1 | f1 | Continuous macro layer with frequency f1 |

A. Co-located cell structure

# FIG.1A

Continuous macro layer with frequency f2 (PL for MBMS service)

Continuous micro layer with frequency f1

B. Hierarchical cell structure

# FIG.1B

FIG.2

FIG.3

Reception of signallings to indicate FLC — 401

UE joined this service? — 402
→ NO → No FLC, follow R99 measurement rule — 403

YES ↓

Is cell structure HCS? — 411
→ YES → Is PL higher priority leve cell & high speed UE? — 421 → YES

NO ↓               NO ↓

Measure only on PL which indicated in signalling — 412

Apply MBMS offset in S criteria equation in PL — 413

Is there any cell in PL to satisfy S criteria ? — 431
→ NO → Continuous measure on PL for reselection to PL (timer mechrism, etc) — 433

YES ↓

Reselect to the cell which has biggest S — 432

# FIG.4

⟨ Is priority level of PL higher than that of present cell & moves UE at high speed ? ⟩

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Issues on Frequency Layer Convergence. *3GPP TSG RAN WG2 draft, R2-040538,* February 2004